Europäisches Patentamt

European Patent Office

Office européen des brevets

(19)

(11) Veröffentlichungsnummer: **0 223 079**
**B1**

(12) **EUROPÄISCHE PATENTSCHRIFT**

(45) Veröffentlichungstag der Patentschrift:
15.03.89

(51) Int. Cl.⁴: **B65G 39/09**

(21) Anmeldenummer: **86114426.9**

(22) Anmeldetag: **17.10.86**

(54) **Rollelement.**

(30) Priorität: **19.11.85 DE 3541020**

(43) Veröffentlichungstag der Anmeldung:
27.05.87 Patentblatt 87/22

(45) Bekanntmachung des Hinweises auf die Patenterteilung:
15.03.89 Patentblatt 89/11

(84) Benannte Vertragsstaaten:
BE CH DE ES FR GB IT LI NL SE

(56) Entgegenhaltungen:
AT-B- 172 760
DE-B- 2 213 021
FR-A- 1 297 185

(73) Patentinhaber: **Deutsche Star GmbH,
Ernst-Sachs-Strasse 90, D-8720 Schweinfurt 1(DE)**

(72) Erfinder: **Blaurock, Günter, Wielandstrasse 7,
D-8721 Niederwerrn(DE)**

(74) Vertreter: **Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86(DE)**

**Beschreibung**

Die Erfindung betrifft ein Rollelement, umfassend ein zum Einbau in einen Stützkörper ausgebildetes, um eine Symmetrieachse im wesentlichen rotationssymmetrisches Aufnahmegehäuse und eine innerhalb des Aufnahmegehäuses untergebrachte, gegen Entnahme aus dem Aufnahmegehäuse gesicherte, innerhalb des Aufnahmegehäuses rollfähig gelagerte und das Aufnahmegehäuse in Richtung der Symmetrieachse mit einem Außenpol überragende Hauptkugel, wobei das Aufnahmegehäuse mit einem dem Außenpol der Hauptkugel fernen Gehäuseteil in eine Aufnahmebohrung des Stützkörpers einsetzbar und mit einer zur Symmetrieachse im wesentlichen senkrechten, von dem Außenpol weg weisenden Schulterfläche gegen eine die Aufnahmebohrung des Stützkörpers umgebende Randfläche anlegbar ist und wobei zur Sicherung des Aufnahmegehäuses in der Aufnahmebohrung an dem außenpolfernen Gehäuseteil Sicherungszungen vorgesehen sind, welche im wesentlichen längs die Symmetrieachse schneidenden Großkreisen um den Kugelmittelpunkt verlaufen und an jeweils einem dem Innenpol der Hauptkugel näheren Ende gehäusefest sind und im jeweils anderen, äquatornahen Endbereich eine – von radial außen gesehen – konvexe Knickzone zum Eingriff in die Aufnahmebohrung besitzen und im Bereich dieser Knickzone gegen elastischen Widerstand an die Symmetrieachse radial annäherbar sind.

Solche Rollelemente sind zum Transport von Stückgütern verschiedenster Art geeignet, wobei die Rollelemente entweder mit dem Außenpol nach oben weisend in einer stationären Rollfläche aufgenommen sind, diese Rollfläche also den Stützkörper darstellt, oder nach einer anderen Ausführungsform die Rollelemente mit dem Außenpol nach unten weisend in einer Plattform aufgenommen sind, welche in diesem Fall den Stützkörper darstellt, und die Hauptkugeln auf einer planen Lauffläche aufliegen. Damit ist es möglich, Bewegungen der jeweiligen Last in verschiedenen Bewegungsrichtungen leichtgängig zu ermöglichen.

Zur Lagerung der Hauptkugel in dem Aufnahmegehäuse können dabei zwischen der Hauptkugel und einer teilsphärischen Lagerfläche des Aufnahmegehäuses Laufkugeln vorgesehen sein, was einer bevorzugten Ausführungsform entspricht.

In der DE-AS 2 213 021 ist ein Rollelement beschrieben, das eine lösbare Verriegelungseinrichtung zum Festhalten in einer Aufnahmebohrung einer Plattform aufweist. Die Verriegelungseinrichtung besteht aus entgegengesetzten, senkrecht zur Symmetrieachse des Rollelements verlaufenden, in Bohrungen gleitbar gelagerten Bolzen, auf deren Enden Rückstellfedern wirken, um die Bolzen nach außen und in Eingriff mit Rippen in der Aufnahmebohrung zu drücken. Der Nachteil dieser Konstruktion ist zum einen die aufwendige und teuere Herstellung der Verriegelungseinrichtung, zum anderen eine erforderliche Mindestdicke des Plattformaterials, um einen guten Sitz des Rollelements zu erreichen. Zudem ist bei größeren Materialstärken der Plattform eine spezielle Form der Aufnahmebohrung nötig, so daß diese Art von Rollelement nicht universell einsetzbar ist.

Bei einem anderen bekannten Rollelement (Prospekt der Firma Rehberg GmbH "Kugelrollen Typ RE") wird eine Befestigung in der Aufnahmebohrung des Stützkörpers durch zwei in radialer Richtung – bezogen auf die Symmetrieachse – ausgestellte und abgewinkelte Federstreifen erreicht, die an zwei gegenüberliegenden Stellen des Aufnahmegehäuses verlaufen und am Boden des Aufnahmegehäuses oder an dessen Wandung befestigt sind. Wenn dieses Rollelement eingebaut ist, erzeugen die Federstreifen jeweils eine Kraft senkrecht zur Symmetrieachse des Rollelementes, die auf die Innenfläche der Aufnahmebohrung wirkt und damit bei Auszugbelastung auf das Rollelement eine Reibkraft erzeugt. Dabei kann sich eine zusätzliche Kraft ergeben, die von der beim Ausziehen des Rollelements notwendigen Verformung der Federstreifen herrührt. Die Sitzkraft ergibt sich aus der Summe dieser beiden Kräfte, wobei die Reibkraft nur einen Bruchteil der Verformungskraft ausmacht. Beim Ausbau des Rollelements wird die Sitzkraft durch Heraushebeln von der Randfläche des Stützkörpers her überwunden.

Der Nachteil dieser Ausführungsform besteht darin, daß nur für einen bestimmten, eng eingegrenzten Bereich der Materialdicke der Förderplattform, d.h. des Stützkörpers gute Sitzkraft bei gleichzeitiger Demontierbarkeit gegeben ist. Wenn die Plattform mit den Aufnahmebohrungen zu dünn ist, schnappen die Federstreifen nach dem Einbau des Rollelements wieder in ihre Ausgangslage zurück. Daraus ergeben sich folgende Konsequenzen: Eine radial wirkende Reibkraft ist infolge Zurückfederung nicht mehr vorhanden und das Rollelement sitzt nur locker in der Aufnahmebohrung, wobei sie ausschließlich von den gegen die Rückseite des Stützkörpers anliegenden Federstreifenende mehr oder minder locker gehalten ist. Von einem Festsitz kann daher nicht mehr gesprochen werden. Bei einer ungünstigen Form des Federstreifens, d.h. bei einer grossen Ausstellung, kann es sogar sein, daß ein Ausbau des Rollelements von der Randfläche des Stützkörpers her nicht mehr möglich ist, weil sich die Enden der Federstreifen verhaken, dann nämlich, wenn diese Enden auf einem Radius – bezogen auf die Symmetrieachse – liegen, der größer ist als der Radius der Aufnahmebohrung. Wenn das Plattformmaterial zu dick ist, werden die Federstreifen in der Aufnahmebohrung sehr stark zusammengedrückt, so daß die Ausstellung praktisch verschwindet. Dadurch tritt bei Auszugsbelastung keine Verformungskraft mehr auf. Die Sitzkraft ist damit nur noch reibungsabhängig und daher entsprechend niedrig.

In der FR-PS 1 297 185 wird eine Kugelrolle beschrieben, die durch einen Sicherungsring in einer Aufnahmebohrung gehalten werden kann.

An dieser Konstruktion ist nachteilig, daß ein fester Sitz der Kugelrolle nur bei einer bestimmten Blechdicke der Aufnahmebohrung vorliegt. Wenn die Blechdicke größer ist als der Abstand zwischen der Anlagefläche der Kugelrolle und dem Sicherungsring, dann liegt lediglich Reibschluß zwischen Kugelrolle und Aufnahmebohrung vor. Wird die Blechdicke kleiner als der Abstand Anlagefläche-Sicherungsring, liegt kein axialer Sitz vor und das Element kann sich entsprechend axial bewegen. Bei einer Blechstärke entsprechend dem Abstand Anlagefläche-Sicherungsring oder kleiner ist ein weiterer Nachteil darin zu sehen, daß die Kugelrolle nicht aus der Aufnahmebohrung herausgehebelt werden kann, ohne den Ring vorher zusammenzudrücken.

Der Erfindung liegt die Aufgabe zugrunde, ein Rollelement gattungsgemäßer Art zu schaffen, das in einem erweiterten Bereich von Aufnahmebohrungen unterschiedlichen Durchmessers und unterschiedlicher Tiefe den notwendigen Halt findet, insbesondere auch in Aufnahmebohrungen, deren Tiefe den Abstand zwischen dem Scheitel der Knickzone und der Schulterfläche übersteigt.

Zur Lösung dieser Aufgabe wird erfindungsgemäß vorgeschlagen, daß die Sicherungszungen im Scheitelbereich der Knickzone zum Eingriff mit der Innenumfangsfläche der Aufnahmebohrung jeweils mindestens eine Kralle aufweisen. Die Kralle bzw. Krallen können sich unter der Federkraft der radial einwärts gedrängten Sicherungszungen in die Wandung der Aufnahmebohrung eingraben und damit eine Art formschlüssiger Verbindung herstellen. Auf diese Weise wird auch bei Verwendung von dicken Plattformen als Stützkörper, bei denen die schulterflächennahe Flanke der Abwinkelung nicht mehr wirksam ist, eine hohe Sitzkraft erreicht. Bei weichem Plattformmaterial, wie Holz oder Kunststoff, ist der Formschluß besonders intensiv, was einen zusätzlichen Vorteil erbringt.

Die Krallen sind bevorzugt derart sägezahnförmig ausgebildet und gerichtet, daß sie dem Einführen in die Aufnahmebohrung geringeren Widerstand entgegensetzen als dem Ausziehen aus der Aufnahmebohrung.

Die Krallenprofile können selbstverständlich dem jeweils zu erwartenden Material des Stützkörpers angepaßt werden; mit anderen Worten: Man kann kleine Krallenprofile verwenden, wenn man mit metallischen Innenflächen der Aufnahmebohrungen zu rechnen hat, entsprechend etwa dem Profil einer Metallsäge, und man kann größere Krallenprofile verwenden, wenn man mit Innenflächen der Aufnahmebohrungen aus Holz, Kunststoff oder Holzfasermaterial rechnet, etwa entsprechend dem Profil einer Holzsäge. Es ist weiterhin denkbar, daß man im Hinblick auf universelle Anwendbarkeit einen Kompromiß schließt und die Krallen entsprechend dem Ergebnis einfacher Vorversuche mit einem mittleren Profil ausführt.

Nach einer bevorzugten Weiterbildung der Erfindung ist vorgesehen, daß die innenpolfernen Enden der Sicherungszungen soweit an die Schulterfläche heranreichen, als es im Hinblick auf den Verformungsbereich der Sicherungszungen beim Einsetzen in Aufnahmebohrungen unterschiedlichen Durchmessers möglich ist. Bei dieser Ausführungsform besteht auch bei besonders dünnen als Stützkörper zum Einsatz kommenden Plattformen nicht mehr die Gefahr, daß die Enden der Sicherungszungen hinter eine schulterflächenferne Rückfläche der Plattform zurückschnappen und dann ein Aushebeln überhaupt nicht mehr, jedenfalls aber nicht mehr ohne Einwirkung auf die Sicherungszungen mittels eines von außen eingeführten Löseinstruments möglich ist. Bei dieser Ausführungsform ist im Falle einer dicken Plattform als Stützkörper die Auszugssicherung durch den Eingriff der Krallen in die Umfangsfläche der Aufnahmebohrung gewährleistet und bei dünner Plattform als Stützkörper durch das Zusammenwirken der äußeren Knickflanke der Sicherungszunge mit der außenpolfernen Kante der Aufnahmebohrung. In jedem Fall ist ein Lösen des Rollelements möglich, wenn nur der Eingriff der Krallen mit dem Stützkörpermaterial bzw. der Eingriff der äußeren Knickflanke der Sicherungszunge mit der außenpolfernen Kante der Innenbohrung überwunden wird.

Die Krallen können durch Prägung des Materials der Sicherungszungen gebildet sein. Dabei sind die Sicherungszungen bevorzugt aus Stahl, ggfs. gehärtetem Stahl, wie Federstahl hergestellt. Die Krallen können aber auch durch Ausstanzen und Abwinkeln eines Endlappens der jeweiligen Sicherungszunge gebildet sein.

Zur Erzielung eines noch besseren Sitzes und zum Schutz der Sicherungszungen können diese teilweise von einem Aufnahmeschlitz an der Außenseite des außenpolfernen Gehäuseteils aufgenommen und in diesen hineinfederbar sein.

Wenn das Aufnahmegehäuse eine Lagerschale, eine die Lagerschale umschließende Befestigungsschale und eine mit der Befestigungsschale verbundene und die Hauptkugel in der Lagerschale sichernde Halteringanordnung umfaßt, wie dies schon im Stand der Technik beispielsweise nach der DE-AS 2 213 021 der Fall ist, so können die Sicherungszungen an der Befestigungsschale befestigt oder einstückig aus dieser ausgestanzt sein.

Bei der erfindungsgemäßen Ausbildung eines Rollelements ist es in der Regel möglich, das Rollelement von dem Stützkörper durch Aushebeln mit entsprechendem Kraftaufwand zu lösen, ohne daß die Aufnahmebohrung unbrauchbar wird. Zur Erleichterung des Ausziehens in Extremfällen kann man in der Schulterfläche Ausnehmungen vorsehen, welche bei Anliegen der Schulterfläche an der Randfläche des Stützkörpers einem Lösewerkzeug Zutritt zu den innenpolfernen Enden der Sicherungszungen gewähren.

Die Sicherungszungen können von Federstreifen gebildet sein, wobei es möglich ist, neben einer Elastizität im Bereich der Zungenwurzel auch eine Elastizität im Bereich der Knickzone vorzusehen, welche bei sehr eng umschließenden Aufnahmebohrungen wirksam wird.

Die beiliegenden Figuren erläutern die Erfindung anhand von Ausführungsbeispielen. Es stellen dar:

Figur 1 eine Ansicht, teilweise im Schnitt, eines erfindungsgemäßen Rollelements;

Figuren 2a, 2b und 2c die Knickzonen von Sicherungszungen unterschiedlicher Ausführungsformen;

Figur 3a eine Teilansicht der Knickzone einer weiteren Ausführungsform einer Sicherungszunge;

Figur 3b eine Ansicht in Pfeilrichtung 111b auf die Sicherungszunge gemäß Figur 3a;

Figur 4 eine weitere Ausführungsform eines Rollelements, bei dem die Sicherungszungen einstückig mit einer Befestigungsschale hergestellt sind;

Figuren 5, 6 und 7 Einbaubeispiele für ein Rollelement gemäß Figuren 1 oder 4.

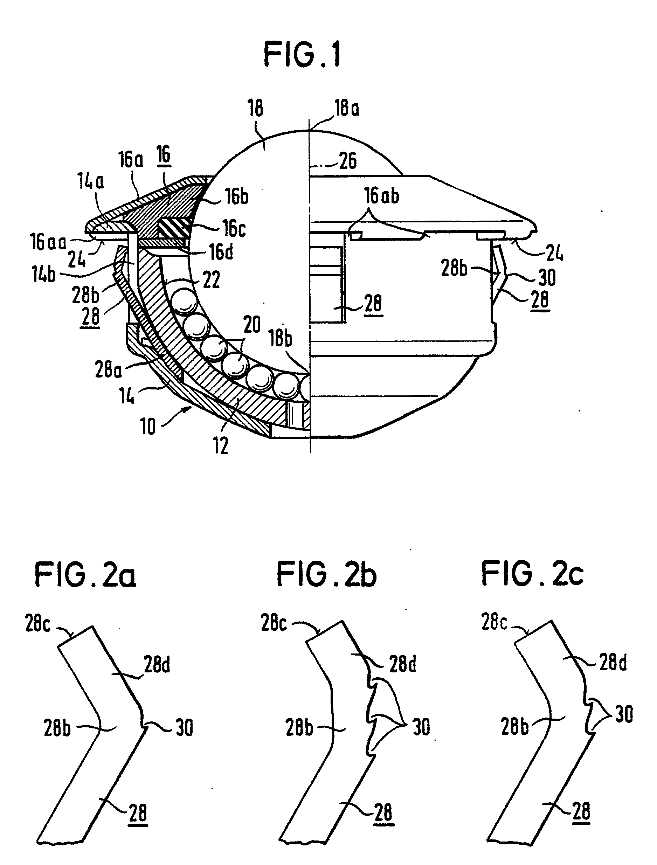

In Figur 1 ist das Aufnahmegehäuse ganz allgemein mit 10 bezeichnet. Dieses Aufnahmegehäuse setzt sich zusammen aus einer Lagerschale 12, einer Befestigungsschale 14 und einer Halteringanordnung 16. Eine Hauptkugel 18 ist in der Lagerschale 12 vermittels Laufkugeln 20 gelagert, die an einer Innenlauffläche 22 der Lagerschale 12 ablaufen. Die Hauptkugel 18 ist gegen Entnahme aus dem Aufnahmegehäuse 10 durch die Halteringanordnung 16 gesichert, die sich ihrerseits aus einem Blechring 16a, einem Profilring 16b, einem Dichtring 16c und einer Ringscheibe 16d zusammensetzt. Der Blechring 16a ist mittels umgebördelter Lappen 16aa an einem Radialflansch 14a der Befestigungsschale 14 befestigt. Die Lappen 16aa bilden eine Schulterfläche 24 zur Anlage an dem jeweiligen Stützkörper.

Das Rollelement besitzt eine Symmetrieachse 26. Um diese Symmetrieachse ist das Rollelement im wesentlichen rotationssymmetrisch. Die Hauptkugel 18 besitzt einen Außenpol 18a und einen Innenpol 18b.

An der Befestigungsschale 14 sind Sicherungszungen 28 befestigt, die mit ihren innenpolnäheren Enden 28a zwischen der Befestigungsschale 14 und der Lagerschale 12 aufgenommen sind und an der Befestigungsschale 14 beispielsweise festgeschweißt oder formschlüssig gehalten sind. Die Sicherungszungen 28 durchgreifen Schlitze 14b der Befestigungsschale 14 und weisen an ihrem innenpolfernen Endbereich eine Knickzone 28b auf. In dieser Knickzone 28b sind, wie aus Figuren 2a, 2b und 2c zu ersehen, ein oder mehrere sägezahnförmige Krallen 30 angebracht. Die innenpolfernen Enden der Sicherungszungen 28 sind mit 28c bezeichnet, die innenpolfernen Flanken der Knickzonen 28b mit 28d. Die Enden 28c der Sicherungszungen 28 haben nur einen ganz geringen Abstand von der Schulterfläche 24. Dieser Abstand ist so bemessen, daß bei größtmöglicher Annäherung der Sicherungszungen 28 an die Symmetrieachse 26 die Enden 28c der Sicherungszungen 28 annähernd die Schulterfläche 24 erreichen. Die Krallen 30 sind durch Prägen oder durch spanabhebende Bearbeitung des Sicherungszungenmaterials gebildet.

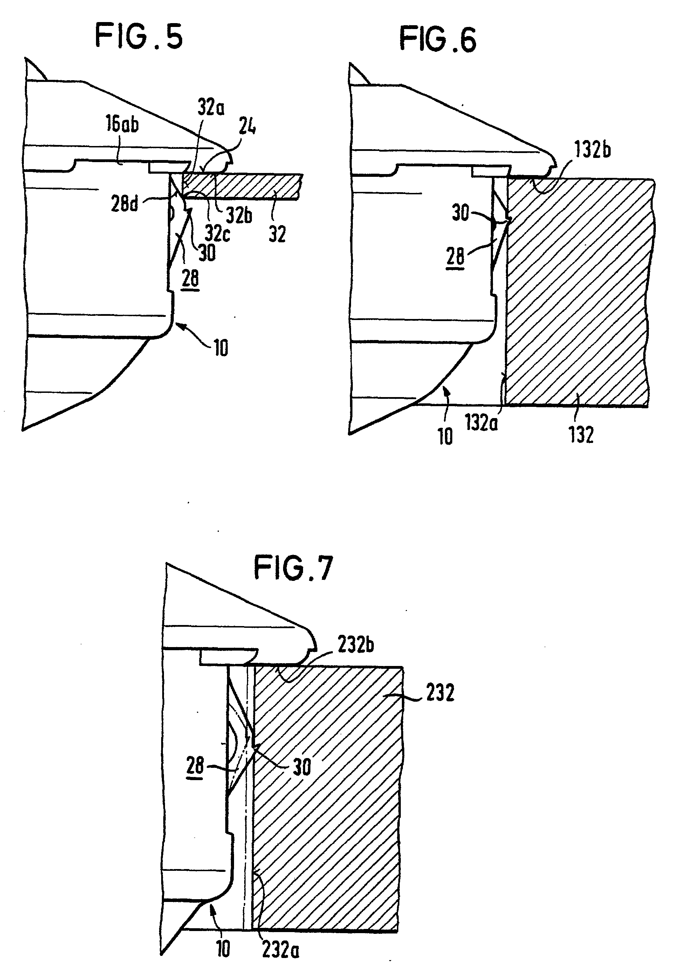

In Figur 5 ist ein Einbaufall dargestellt, bei dem das Rollelement in eine relativ dünne Plattform 32 mit einer Bohrungsinnenfläche 32a eingesetzt ist und die Schulterfläche 24 auf einer Randfläche 32b der Innenbohrung 32a eben aufliegt. Bei dieser Ausführungsform liegt die außenpolferne Kante 32c der Innenbohrung 32a an der innenpolfernen Flanke 28d der Knickzone 28b an. Damit ist eine Auszugssicherung zunächst durch das elastische Zusammenwirken der Flanke 28d und der Kante 32c erzielt. Bei einem weiteren Ausziehversuch stößt die Kralle 30 gegen die Kante 32c an. Ein unbeabsichtigtes Entnehmen des Rollelements aus der Innenbohrung 32a ist daher nicht möglich. Soll das Rollelement etwa zwecks Wartung oder Austausch aus der Innenbohrung 32a entnommen werden, so ist dies mit entsprechend großem Kraftaufwand möglich, ohne daß eine Zerstörung der Innenbohrung 32a eintritt. Unterstützt werden kann ein Ausbau dadurch, daß man durch die zwischen den Lappen 16aa gebildeten Ausnehmungen 16ab in der Schulterfläche 24 ein spitzes Instrument führt und die Sicherungszungen 28 radial einwärts drückt. Dies kann bei entsprechend schrägem Ausbau der Rollelemente durch Aushebeln zunächst an einer Seite an den einzelnen Sicherungszungen nacheinander geschehen.

In Figur 6 ist ein Einbaufall mit einer dicken Plattform 132 dargestellt, wobei die Sicherung dann ausschließlich durch die Kralle 30 im Eingriff mit der Innenbohrung 132a gewährleistet ist. Der Einbau erfolgt wie im Falle der Figur 5 durch einfaches Eindrücken in die Innenbohrung 132a. Der Ausbau kann, wie im Zusammenhang mit Figur 5 beschrieben, erfolgen.

Figur 7 zeigt einen Einbaufall, der sich von demjenigen der Figur 6 nur dadurch unterscheidet, daß die Innenbohrung 232a größeren Durchmesser besitzt als im Falle von Figur 6, wobei der Ausgleich durch die Federungseigenschaften der Sicherungszunge 28 gewährleistet ist.

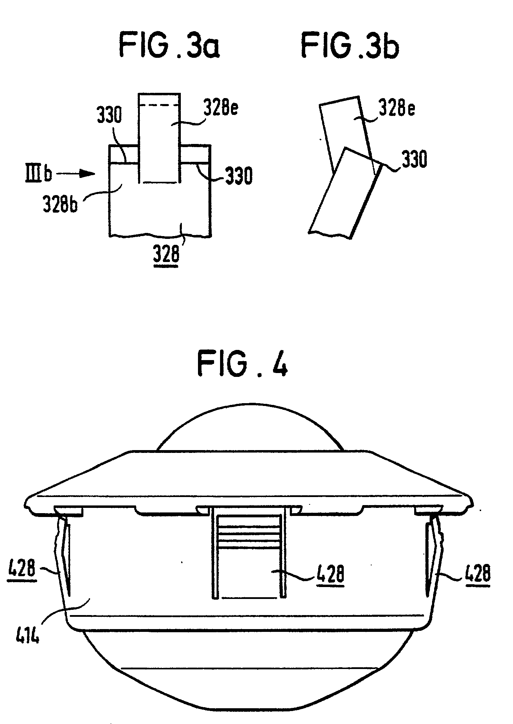

In den Figuren 3a und 3b ist die Knickzone 328b einer abgewandelten Ausführungsform einer Sicherungszunge 328 dargestellt. Hier ist die Kralle 330 durch Ausstanzen und Abknicken eines Lappens 328e gebildet.

In der Ausführungsform gemäß Figur 4 sind die Sicherungszungen 428 einstückig mit der Befestigungsschale 4l4 durch Ausstanzen aus dieser hergestellt.

Wenn hier von Befestigungskrallen die Rede ist, so ist dieser Begriff in der Weise allgemein zu verstehen, daß er jede Art von reibungserhöhenden Profilierungen im Knickbereich der Sicherungszungen umfaßt.

Wenn, wie in Figur 2b dargestellt, mehr als zwei Krallen vorhanden sind, so können diese entweder auf einer gemeinsamen Verbindungsgeraden oder auf einem nach radial außen konvexen Kreisbogen liegen. Die Ausführungsformen nach Figuren 2b und 2c gewährleisten, daß jeweils mindestens eine der Krallen 30 zum Eingriff mit dem Material des Stützkörpers bzw. der Plattform gelangt.

Die Halteringanordnung 16 ist, wie aus den Figuren zu ersehen, in an sich bekannter Weise mit einer Anlaufschräge versehen.

Wenn die Innenbohrungen zur Aufnahme der Rollelemente in ihrem Durchmesser sehr eng sind, so kann es auch zu einer Verformung in der Knickzone 28b kommen.

Es ist grundsätzlich mit zwei Sicherungszungen auszukommen. Bevorzugt werden mehr als zwei, vorzugsweise 3 oder 4 Sicherungszungen über den Umfang gleichmäßig verteilt.

## Patentansprüche

1. Rollelement, umfassend ein zum Einbau in einen Stützkörper (32, 132, 232) ausgebildetes, um eine Symmetrieachse (26) im wesentlichen rotationssymmetrisches Aufnahmegehäuse (10) und eine innerhalb des Aufnahmegehäuses (10) untergebrachte, gegen Entnahme aus dem Aufnahmegehäuse (10) gesicherte, innerhalb des Aufnahmegehäuses (10) rollfähig gelagerte und das Aufnahmegehäuse (10) in Richtung der Symmetrieachse (26) mit einem Außenpol (18a) überragende Hauptkugel (18),
wobei das Aufnahmegehäuse (10) mit einem dem Aussenpol (18a) der Hauptkugel (18) fernen Gehäuseteil in eine Aufnahmebohrung (32a, 132a, 232a) des Stützkörpers (32, 132, 232) einsetzbar und mit einer zur Symmetrieachse (26) im wesentlichen senkrechten, von dem Außenpol (18a) weg weisenden Schulterfläche (24) gegen eine die Aufnahmebohrung des Stützkörpers umgebende Randfläche (32b, 132b, 232b) anlegbar ist und
wobei zur Sicherung des Aufnahmegehäuses (10) in der Aufnahmebohrung an dem außenpolfernen Gehäuseteil Sicherungszungen (28) vorgesehen sind, welche im wesentlichen längs die Symmetrieachse (26) schneidenden Großkreisen um den Kugelmittelpunkt verlaufen und an jeweils einem dem Innenpol (18b) der Hauptkugel (18) näheren Ende gehäusefest sind und im jeweils anderen, äquatornahen Endbereich eine – von radial außen gesehen – konvexe Knickzone (28b) zum Eingriff in die Aufnahmebohrung (32a, 132a, 232a) besitzen und im Bereich dieser Knickzone (28b) gegen elastischen Widerstand an die Symmetrieachse (26) radial annäherbar sind, dadurch gekennzeichnet,
daß die Sicherungszungen (28) im Scheitelbereich der Knickzone (28b) zum Eingriff mit der Innenumfangsfläche der Aufnahmebohrung (32a, 132a, 232a) jeweils mindestens eine Kralle (30) aufweisen.

2. Rollelement nach Anspruch 1, dadurch gekennzeichnet, daß die Kralle (30) derart sägezahnförmig ausgebildet und gerichtet ist, daß sie dem Einführen in die Aufnahmebohrung (32a, 132a, 232a) geringeren Widerstand entgegensetzt als dem Ausziehen aus der Aufnahmebohrung.

3. Rollelement nach einem der Ansprüche 1 und 2, dadurch gekennzeichnet, daß die innenpolfernen Enden (28c) der Sicherungszungen (28) soweit an die Schulterfläche (24) heranreichen oder in Ausnehmungen (16ab) der Schulterfläche (24) hineinragen, als es im Hinblick auf den Verformungsbereich der Sicherungszungen (28) beim Einsetzen in Aufnahmebohrungen (32a, 132a, 232a) unterschiedlichen Durchmessers möglich ist.

4. Rollelement nach einem der Ansprüche 1 bis 3, dadurch gekennzeichnet, daß die Krallen (30) durch Prägung des Materials der Sicherungszungen (28) gebildet sind.

5. Rollelement nach einem der Ansprüche 1 bis 3, dadurch gekennzeichnet, daß die Krallen (30) durch Ausstanzen und Abwinkeln eines Endlappens (328e) der Sicherungszungen (328) gebildet sind.

6. Rollelement nach einem der Ansprüche 1 bis 5, dadurch gekennzeichnet, daß die Sicherungszungen (28) teilweise von einem Aufnahmeschlitz (14b) an der Außenseite des außenpolfernen Gehäuseteils aufgenommen und in diesen hineinfederbar sind.

7. Rollelement nach einem der Ansprüche 1 bis 6, dadurch gekennzeichnet, daß das Aufnahmegehäuse (10) eine Lagerschale (12), eine die Lagerschale (12) umschließende Befestigungsschale (14) und eine mit der Befestigungsschale (14) verbundene und die Hauptkugel (18) in der Lagerschale (12) sichernde Halteringanordnung (16) umfaßt, wobei die Sicherungszungen (28, 428) an der Befestigungsschale (14, 414) befestigt oder einstückig aus dieser ausgestanzt sind.

8. Rollelement nach einem der Ansprüche 3 bis 7, dadurch gekennzeichnet, daß in der Schulterfläche (24) Ausnehmungen (16ab) vorgesehen sind, welche bei Anliegen der Schulterfläche (24) an der Randfläche (32b) des Stützkörpers (32) einem Lösewerkzeug Zutritt zu den innenpolfernen Enden der Sicherungszungen (28) gewähren.

9. Rollelement nach einem der Ansprüche 1 bis 8, dadurch gekennzeichnet, daß die Sicherungszungen (28) von Federstreifen gebildet sind.

## Claims

1. Rolling element, comprising a housing (10) constructed for installation into a supporting member (32, 132, 232) and substantially rotationally symmetrical about an axis (26) or symmetry and, accommodated inside the housing (10), main ball (18) which is secured against removal from the housing (10) while being mounted to roll within the housing (10) and having an external pole (18a) which projects beyond the housing (10) in the direction of the axis (26) of symmetry, the housing (10) driving a housing part remote from the external pole (18a) of the main ball (18) which can be inserted into a receiving bore (32a, 132a, 232a) in the supporting member (32, 132, 232) and further comprising substantially perpendicular to the axis (26) of symmetry and directed away from the external pole (18a), a shoulder surface (24) which can be applied against a marginal surface (32b, 132b, 232b) which surrounds the receiving bore of the supporting member and comprising, in order to secure the housing (10) in the receiving bore, locking tongues (28) which extend substantially lengthwise of great circles around the central point of the ball and which cut the axis (26) of symmetry, the said tongues being rigid with the housing at an end which is closer to the internal pole (18b) of the main ball (18) having in the other end zone which is close to the equator of the ball – viewed radially from the outside – a convex bend (28b) for engagement into the receiving bore (32a, 132a, 232a), in the region of which bend (28b) the said tongues are adapted to be brought radially into proximity of the axis (26) of symmetry against elastic resistance, characterised in that the locking tongues (28) in each case comprise at least one claw (30) in the region of the apex of the bend (28b) for engagement with the inner peripheral face of the receiving bore (32a, 132a, 232a).

2. Rolling element according to Claim 1, characterised in that the claw (30) is so constructed and directed in serrated fashion that it offers less resistance to insertion into the receiving bore (32a, 132a, 232a) than it does to withdrawal from the receiving bore.

3. Rolling element according to one of Claims 1 and 2, characterised in that the ends (28c) of the locking tongues (28) which are remote from the internal pole extend sufficiently towards the shoulder surface (24) are project into recesses (16ab) in the shoulder surface (24) as is possible having regard to the area of deformation of the locking tongues (28) upon insertion into receiving bores (32a, 132a, 232a) of different diameter.

4. Rolling element according to one of Claims 1 to 3, characterised in that the claws (30) are formed by stamping the material of the locking tongues (28).

5. Rolling element according to one of Claims 1 to 3, characterised in that the claws (30) are formed by stamping out and angling over an end lug (328e) on the locking tongues (328).

6. Rolling element according to one of Claims 1 to 5, characterised in that the locking tongues (28) partly housed by and can be resiliently inserted into a receiving slot (14b) on the outside of the housing part which is remote from the external pole.

7. Rolling element according to one of Claims 1 to 6, characterised in that the housing (10) comprises a bearing shell (12), a fixing shell (14) enclosing the bearing shell (12) and a retaining ring arrangement (16) which is connected to the fixing shell (14) and which secures the main ball (18) in the bearing shell (12), the locking tongues (28, 428) being fixed on the fixing shell (14, 414) or being in one piece with the fixing shell from which they are stamped.

8. Rolling element according to one of Claims 3 to 7, characterised in that there are in the shoulder surface (24) recesses (16ab) which, when the shoulder surface (24) is applied against the marginal surface (32b) of the supporting member (32), provide access for a loosening tool to reach the ends of the locking tongues (28) which are remote from the internal pole.

9. Rolling element according to one of Claims 1 to 8, characterised in that the locking tongues (28) consist of spring strips.

## Revendications

1. Elément de roulement, comprenant un boîtier récepteur (10) conformé pour être inséré dans un corps de soutien (32, 132, 232) et qui est pour l'essentiel à symétrie de révolution autour d'un axe de symétrie (26), et comprenant une bille principale (18) logée à l'intérieur du boîtier récepteur (10), empêchée de sortir du boîtier récepteur (10), montée avec possibilité de roulement à l'intérieur du boîtier récepteur (10), et dépassant par un pôle extérieur (18a) en direction de l'axe de symétrie (26), le boîtier récepteur (10) pouvant être inséré, par une partie de ce boîtier éloignée du pôle extérieur (18a) de la bille principale (18), dans un alésage récepteur (32a, 132a, 232a) du corps de soutien (32, 132, 232), et pouvant être appliqué, par une face d'épaulement (24) sensiblement perpendiculaire à l'axe de symétrie (26) et s'étendant en éloignement du pôle extérieur (18a), contre und face de bord (32b, 132b, 232b) entourant l'alésage récepteur du corps de soutien,
et des languettes de blocage (28) étant prévues sur la partie du boîtier éloignée du pôle extérieur pour bloquer le logment récepteur (10) dans l'alésage récepteur, lesquelles languettes s'étendent sensiblement le long de grands cercles qui sont tracés autour du centre de la bille et qui coupent l'axe de symétrie (26), et lesquelles languettes sont solidaires du boîtier à leur extrémité respective plus proche du pôle intérieur (18b) de la bille principale (18), et possédent, à leur autre extrémité respective proche de l'équateur, une zone d'inflexion (28b) qui, vue radialement de l'extérieur, est convexe et sert à l'engagement dans l'alésage récepteur (32a, 132a, 232a), et peuvent, dans la région de cette zone d'inflexion (28b), être rapprochées radialement de l'axe de symétrie (26) à l'encontre d'une résistance élastique, caractérisé en ce que les languettes de blocage (28) présentent chacune au moins une griffe (30) dans la région du sommet de la zone d'inflexion (28b), en vue de l'engagement avec la face périphérique intérieure de l'alésage récepteur (32a, 132a, 232a).

2. Elément de roulement selon la revendication 1, caractérisé en ce que la griffe (30) est conformée en dents de scie et orientée de telle sorte qu'elle oppose une moins grande résistance à l'introduction dans l'alésage récepteur (32a, 132a, 232a) qu'à l'extraction hors de l'alésage récepteur.

3. Elément de roulement selon la revendication 1 ou 2, caractérisé en ce que les extrémités (28c) des languettes de blocage (28) qui sont éloignées du pôle intérieur atteignent la face d'épaulement (24) ou pénètrent dans des évidements (16ab) de la face d'épaulement (24) aussi loin que cela est possible au vu de la région de déformation des languettes de blocage (28) lors de leur insertion dans des alésages récepteurs (32a, 132a, 232a) de diamètres différents.

4. Elément de roulement selon l'une quelconque des revendications 1 à 3, caractérisé en ce que les griffes (30) sont formées par matriçage du matériau des languettes de blocage (28).

5. Elément de roulement selon l'une quelconque des revendications 1 à 3, caractérisé en ce que les griffes (30) sont formées par découpage et coudage d'une patte terminale (328e) des languettes de blocage (328).

6. Elément de roulement selon l'une quelconque des revendications 1 à 5, caractérisé en ce que les languettes de blocage (28) peuvent être partiellement reçues par et rentrées élastiquement dans une fente réceptrice (14b) prévue sur le côté extérieur de la partie du boîtier qui est éloignée du pôle extérieur.

7. Elément de roulement selon l'une quelconque des revendications 1 à 6, caractérisé en ce que le boîtier récepteur (10) renferme un coussinet de palier (12), une coque de fixation (14) entourant le coussinet de palier (12), et un ensemble de bague de maintien (16) assemblé à la coque de fixation (14) et bloquant la bille principale (18) dans le coussinet de palier (12), les languettes de fixation (28, 428) étant fixées sur la coque de fixation (14, 414) ou obtenues par matriçage de cette dernière.

8. Elément de roulement selon l'une quelconque des revendications 3 à 7, caractérisé en ce que sont prévus dans la face d'épaulement (24) des évidenemts (16ab) qui, lors de l'application de la face d'épaulement (24) contre la face de bord (32b) du corps de soutien (32), assurent l'accès d'un outil de démontage aux extrémités des languettes de blocage (28) qui sont éloignées du pôle intérieur.

9. Elément de roulement selon l'une quelconque des revendications 1 à 8, caractérisé en ce que les languettes de blocage (28) consistent en des bandes élastiques.

EP 0 223 079 B1

# FIG.1

# FIG.2a

# FIG.2b

# FIG.2c

EP 0 223 079 B1

# FIG.3a

330 — 328e

IIIb → 330

328b

**328**

# FIG.3b

328e — 330

# FIG. 4

**428**   **428**   **428**

414

EP 0 223 079 B1

FIG.5

FIG.6

16ab
32a
24
28d
32b
32c
32
30
28
10

132b
30
28
10
132a
132

FIG.7

232b
232
28
30
10
232a